# DEMANDE DE BREVET EUROPEEN

(11) **EP 0 798 141 A1**
(43) Date de publication de la demande: **01.10.1997**
(21) Numéro de dépôt: 97400595.1
(22) Date de dépôt: 18.03.1997
(51) Int. Cl.: B60C 17/06

(54) **Dispositif de roulage à plat pour véhicule automobile et son procédé de montage**

(30) Priorité: 26.03.1996 FR 9603732
(71) Demandeur: HUTCHINSON, F-75008 Paris (FR)
(72) Inventeur: Lelievre, Alain, 60530 Fresnoy en Thelle (FR); Ratet, Florence, 45200 Amilly (FR); Michelot, Eric, 78240 Chambourcy (FR)
(74) Mandataire: Ramey, Daniel

(57) **Abrégé**

Dispositif de roulage à plat pour véhicule automobile, comprenant une pièce annulaire en matière plastique montée sur la jante d'une roue à l'intérieur d'un pneumatique et réalisée en un ou plusieurs secteurs (12) dont les extrémités sont reliées par des moyens comprenant une tige cylindrique (18) fixée amoviblement sur un secteur (12) et emmanchée à force dans une pièce femelle (20) solidaire d'un autre secteur (12), la pièce femelle (20) comprenant des dents radiales inclinées en saillie sur sa surface interne, qui s'ancrent sur la tige (18) en permettant son emmanchement et en s'opposant à son retrait.

## Description

L'invention concerne un dispositif de roulage à plat pour véhicule automobile, en particulier pour un véhicule de tourisme, et son procédé de montage.

Les véhicules de tourisme sont équipés pour la plupart de pneumatiques sans chambre à air, auxquels on peut associer des dispositifs de roulage à plat montés à demeure sur les jantes des roues et permettant de parcourir une distance d'une centaine de kilomètres au minimum avec un pneumatique insuffisamment gonflé ou totalement dégonflé. Les avantages essentiels de ces dispositifs sont de permettre aux conducteurs de continuer jusqu'à un garage sans devoir changer de roue entre-temps et aux constructeurs automobiles de supprimer les roues de secours sur ces véhicules.

Comme décrit notamment dans les demandes de brevet européen 0.679.544 et 0.721.854 de la demanderesse, les dispositifs de roulage à plat comprennent en général une pièce annulaire en matière plastique destinée à être montée sur une jante d'une roue à l'intérieur d'un pneumatique et réalisée en un ou plusieurs secteurs dont les extrémités en regard sont reliées par des moyens de liaison rigide à longueur réglable, du type vis-écrou.

Ces moyens connus de liaison sont sensibles aux vibrations, ce qui oblige à immobiliser les écrous en rotation sur les vis par divers moyens plus ou moins appropriés, tels que des points de colle par exemple, qui peuvent ensuite s'opposer au démontage. Un autre inconvénient de ces systèmes connus est le temps nécessaire à leur serrage, qui peut être de plusieurs minutes et qui interdit des montages en grande série à cadence rapide. Ces systèmes vis-écrou doivent en effet être manoeuvrés lorsque le dispositif de roulage à plat est monté à l'intérieur du pneumatique dont un talon a été dégagé de la jante de la roue. Un ouvrier doit passer les mains et un outil à l'intérieur du pneumatique, entre celui-ci et la jante, pour fixer convenablement le dispositif de roulage à plat sur la jante de la roue, ce qui est long et peu commode.

On a déjà proposé, dans le brevet français 2 383 031, des moyens de liaison comprenant une tige filetée dont une extrémité est fixée de façon non démontable sur une extrémité de secteur et dont l'autre extrémité est engagée à force dans une pièce cylindrique fendue comprenant sur sa périphérie interne des dents radiales inclinées dans un sens permettant l'introduction de la tige filetée et s'opposant à son retrait, cette pièce fendue étant fixée de façon amovible sur une autre extrémité de secteur. Ces moyens connus permettent une liaison rapide des secteurs, mais présentent des inconvénients :
- les dents radiales doivent se positionner entre les filets de la tige filetée, ce qui ne permet pas un réglage continu de la longueur de ces moyens de liaison,
- les dents radiales peuvent être très rigides et dans ce cas le montage et le démontage des moyens de liaison se révèle très difficile ou impossible ou bien elles sont relativement déformables et dans ce cas la résistance à l'arrachement de la tige filetée est trop faible et le serrage des secteurs sur la jante est insuffisant.

Ces moyens connus ne sont donc utilisés que pour des dispositifs de roulage à plat qui sont fixes sur les jantes des roues quand les pneumatiques sont correctement gonflés et qui glissent sur les jantes en cas de roulage à plat.

La présente invention a essentiellement pour but d'éviter ces inconvénients de la technique antérieure.

Elle propose à cet effet un dispositif de roulage à plat équipé de moyens de liaison et de fixation qui sont simples, fiables, peu coûteux et rapides à manoeuvrer pour permettre un montage en grande série à cadence élevée.

Le dispositif de roulage à plat selon l'invention, comprenant une pièce annulaire en matière plastique destinée à être montée sur une jante d'une roue à l'intérieur d'un pneumatique et réalisée en un ou plusieurs secteurs dont deux extrémités en regard sont reliées par des moyens de liaison rigide comprenant une pièce mâle métallique solidaire d'une extrémité de secteur et une pièce femelle métallique solidaire de l'autre extrémité de secteur et formée avec des dents radiales inclinées dans un sens favorisant l'engagement de la pièce mâle dans la pièce femelle et s'opposant à son retrait, est caractérisé en ce que, pour assurer le montage fixe en rotation de la pièce annulaire sur la jante de la roue, la pièce mâle engageable dans la pièce femelle comprend une surface extérieure lisse dans laquelle viennent s'ancrer les dents radiales de la pièce femelle.

De tels moyens de liaison sont extrêmement simples à utiliser puisqu'il suffit de pousser l'une vers l'autre les deux extrémités de secteur, ils sont indéréglables et insensibles aux vibrations et ils permettent un réglage continu du serrage du ou des secteurs sur la jante de la roue, ce serrage étant suffisant pour empêcher le glissement sur la jante du dispositif en cas de roulage à plat.

Selon une autre caractéristique de l'invention, la pièce mâle est fixée de façon amovible sur l'extrémité de secteur, par exemple au moyen d'une patte ou clavette transversale logée dans un passage du secteur débouchant sur une face latérale de ce secteur et engagée dans une gorge ou rainure transversale de la pièce mâle.

Le démontage du dispositif de roulage à plat peut alors être réalisé par extraction de cette patte ou clavette, permettant la libération de la pièce mâle.

Selon une autre caractéristique de l'invention, la patte transversale fait partie d'un crochet de sécurité reliant les deux extrémités de secteur.

Un tel crochet de sécurité permet, en cas de rupture ou d'allongement des moyens de liaison, de garantir que les extrémités de secteur s'écartent peu l'une de l'autre, le dispositif de roulage à plat générant alors un bruit permettant d'alerter le conducteur.

Dans une forme préférée de réalisation de l'invention, ladite pièce mâle est une tige métallique cylindrique, pleine ou tubulaire, à surface extérieure lisse et la pièce femelle comprend une ou plusieurs rondelles métalliques à dents radiales sur leur bord interne, qui sont éventuellement noyées dans un bloc de caoutchouc ou de matière synthétique ou portées par une cage ou armature de matière rigide, métallique ou autre.

Pour le montage d'un dispositif de roulage selon l'invention, il suffit de fixer ce dispositif sur la jante d'une roue en poussant lesdites extrémités de secteur l'une vers l'autre de préférence depuis l'intérieur du pneumatique, ou bien en les serrant l'une vers l'autre au moyen d'un outil engagé sous le pneumatique, dont un talon est dégagé de la jante de la roue.

Ces montages sont extrêmement rapides (quelques secondes par roue) et simples à mettre en oeuvre.

De plus, les dispositifs selon l'invention sont utilisables avec des jantes standard monoblocs, actuellement préconisées par les constructeurs de véhicules automobiles.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
- la figure 1 est une vue partielle en coupe axiale d'une roue équipée d'un dispositif selon l'invention ;
- la figure 2 est une vue schématique de face du dispositif selon l'invention ;
- la figure 3 est une vue schématique de la pièce mâle des moyens de liaison de ce dispositif ;
- les figures 4, 5 et 6 sont des vues schématiques en coupe axiale, de face, et de côté respectivement de la pièce femelle des moyens de liaison ;
- la figure 7 représente schématiquement les moyens de liaison dans une première phase du procédé de montage ;
- la figure 8 est une vue partielle en coupe selon la ligne VIII-VIII de la figure 7 ;
- la figure 9 représente schématiquement les moyens de liaison à la fin du procédé de montage ;
- la figure 10 est une vue partielle en coupe selon la ligne X-X de la figure 9 ;
- les figures 11 à 16 représentent schématiquement des variantes de réalisation des moyens de liaison du dispositif selon l'invention ;
- les figures 17 et 18 représentent schématiquement une variante de réalisation du dispositif selon l'invention ;
- les figures 19 et 20 représentent schématiquement un outil de serrage du dispositif selon l'invention et sa mise en oeuvre.

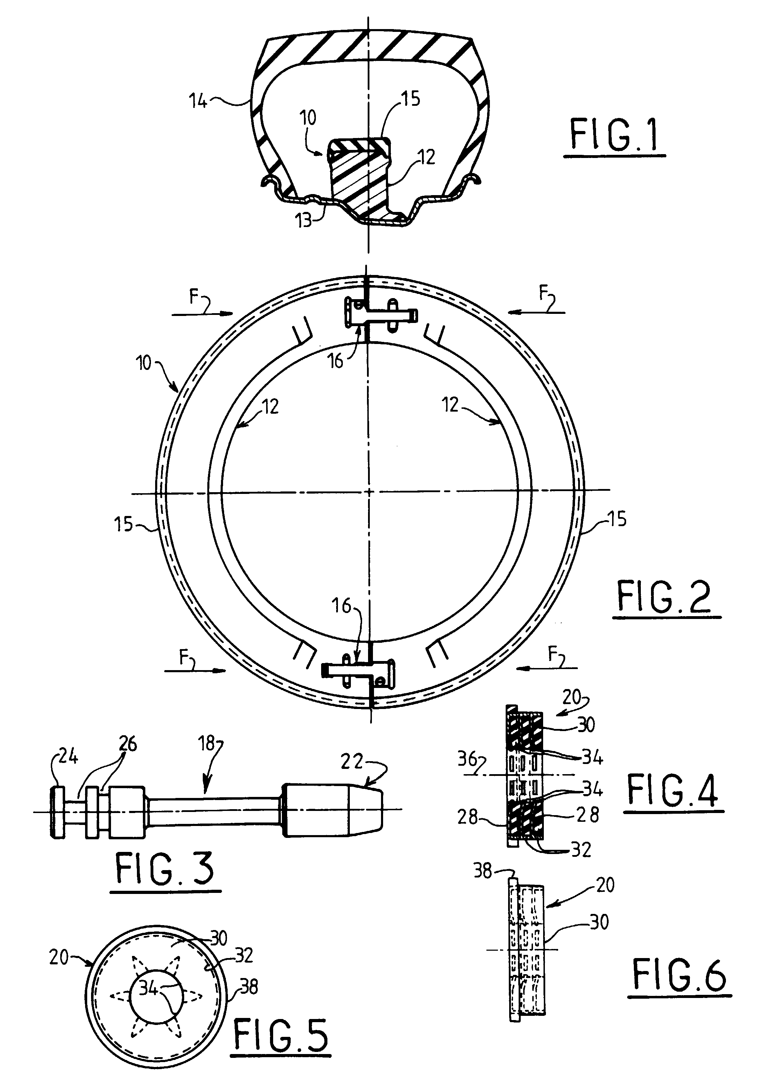

Le dispositif de roulage à plat représenté schématiquement à titre d'exemple aux figures 1 et 2 comprend essentiellement une pièce annulaire 10 formée de deux secteurs semi-circulaires 12 reliés à leurs extrémités par des moyens de liaison 16 du type à encliquetage, la pièce annulaire 10 étant montée et serrée sur la jante 13 d'une roue à l'intérieur d'un pneumatique 14 sans chambre à air, la jante 13 étant du type standard monobloc équipant habituellement les véhicules de tourisme.

Chaque secteur 12 est fabriqué par injection d'une matière plastique appropriée chargée de fibres de verre et sa périphérie extérieure comporte un revêtement de caoutchouc ou d'élastomère formant une bande de roulement 15, comme décrit notamment dans la demande de brevet européen n° 0.721.854 de la demanderesse.

Les dimensions des secteurs 12 sont telles que leurs extrémités en regard sont séparées de quelques millimètres quand ces secteurs sont fixés et serrés sur la jante de la roue, ce jeu très faible permettant de rattraper les tolérances de fabrication des jantes et de mettre le dispositif 10 en tension sur la jante, des moyens étant de plus prévus pour empêcher la rotation du dispositif sur la jante, tels par exemple qu'une clavette engagée entre la jante et le dispositif 10.

Les moyens de liaison 16 sont du type à encliquetage pour un montage rapide et comprennent une pièce mâle 18 fixée sur l'extrémité d'un secteur et une pièce femelle 20 montée sur l'extrémité correspondante de l'autre secteur, la pièce mâle 18 étant emmanchée à force dans la pièce femelle 20.

La pièce mâle 18 représentée en figure 3 est une tige cylindrique métallique, pleine ou tubulaire, dont une extrémité 22 est tronconique pour faciliter son engagement dans la pièce femelle et dont l'extrémité opposée forme une tête 24 qui est reliée à la tige cylindrique par une ou deux gorges 26 de diamètre plus faible.

La pièce femelle 20 dont une forme de réalisation est représentée en détail aux figures 4, 5 et 6, comprend un empilage de rondelles métalliques 28 réalisées par exemple en acier à ressort et noyées dans une bague 30 de caoutchouc ou d'élastomère ou d'une matière plastique appropriée.

Les rondelles métalliques 28 comprennent un rebord annulaire 32 à leur périphérie extérieure, ce qui permet de les positionner facilement en appui les unes sur les autres et elles sont formées sur leur périphérie intérieure avec des dents radiales 34 inclinées par rapport à l'axe longitudinal 36 de la pièce 20, dans un sens permettant de faciliter l'emmanchement de la tige cylindrique 18 dans la pièce 20 et de s'opposer au retrait de la tige cylindrique 18 hors de la pièce 20.

La bague 30 surmoulée sur les rondelles 28 comprend avantageusement un rebord annulaire 38 formant détrompeur à l'une des ses extrémités axiales.

Le surmoulage des rondelles 28 par du caoutchouc ou une matière synthétique appropriée présente les avantages suivants :
- on obtient une pièce unique dans laquelle les rondelles 28 sont correctement positionnées et protégées de la corrosion,
- la matière de surmoulage permet d'amortir les chocs et les vibrations,
- le détrompeur 38 prévu sur la pièce femelle 20 permet d'éviter tout risque d'inversion de la pièce au montage.

En variante, les rondelles 28 pourraient être portées par ou fixées sur une cage métallique ou en toute autre matière rigide appropriée, ou bien être reliées rigidement entre elles par tout moyen approprié.

Selon encore une autre variante, on peut n'utiliser qu'une seule rondelle métallique à dents radiales, sans surmoulage de caoutchouc ou de matière synthétique.

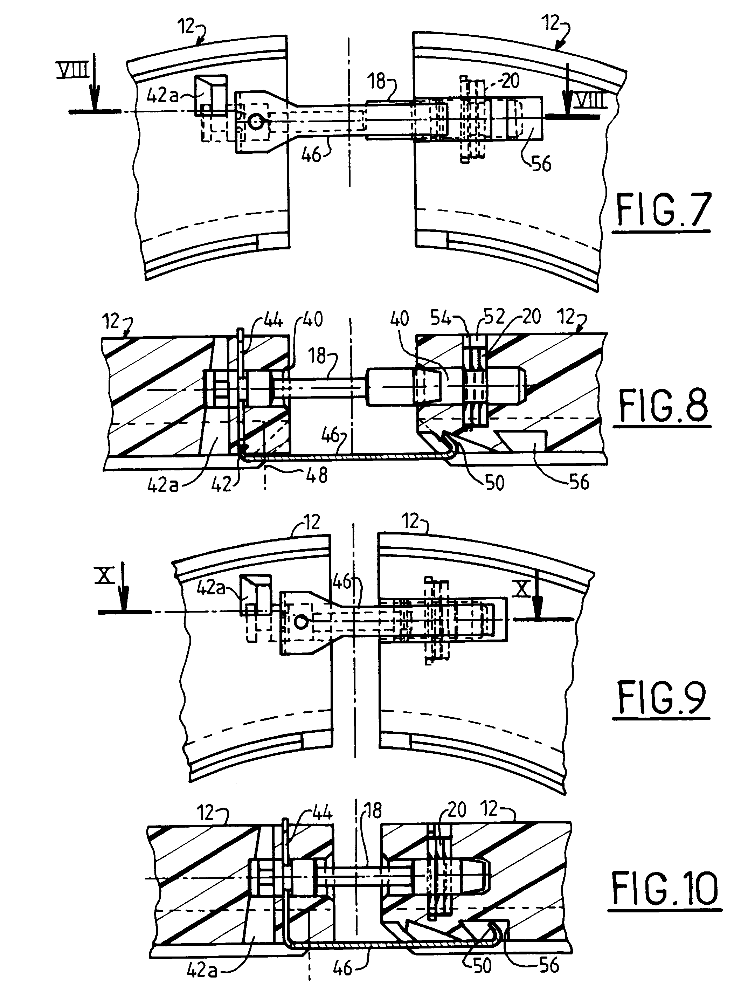

On se réfère maintenant aux figures 7 à 10 pour décrire le montage des moyens de liaison selon l'invention sur les secteurs 12 du dispositif de roulage à plat, et leur utilisation.

Chaque extrémité d'un secteur 12 comprend un passage cylindrique borgne 40 qui débouche perpendiculairement sur la face frontale d'extrémité du secteur et qui s'étend tangentiellement à une circonférence centrée sur l'axe longitudinal du secteur, de sorte que, quand les extrémités de deux secteurs à relier sont en regard l'une de l'autre, leurs passages 40 sont axialement alignés l'un avec l'autre.

La pièce mâle 18 des moyens de liaison est engagée par sa tête 24 dans le passage 40 de l'extrémité du secteur 12 dans une face latérale duquel sont formées deux fentes 42, 42a perpendiculaires à l'axe du passage 40, les fentes 42 et 42a débouchant dans ce passage 40 au voisinage de l'extrémité borgne de celui-ci, de façon à permettre l'accès aux gorges 26 de la tige cylindrique 18.

Une patte en U à deux branches parallèles 44 est engagée dans la fente 42 sur la gorge 26 la plus écartée de la tête 24, l'écartement entre les deux branches 44 étant juste supérieur au diamètre de la gorge 26 de sorte que cette patte en U immobilise la tige 18 en translation axiale dans le passage 40.

La patte en U forme l'extrémité d'un crochet de sécurité 46 fixé par une vis 48 sur une face latérale du secteur 12 et dont l'autre extrémité 50 est repliée vers l'intérieur pour former un bec d'accrochage.

Le passage cylindrique 40 de l'autre extrémité de secteur 12 débouche dans un chambrage 52 formé depuis une face latérale du secteur 12 pour recevoir la pièce femelle 20 représentée aux figures 4 à 6, une extrémité axiale 54 du chambrage 52 ayant un plus grand diamètre pour recevoir le détrompeur 38 de la pièce femelle 20 et éviter de monter celle-ci dans le mauvais sens.

De préférence, la pièce femelle 20 est montée dans le chambrage 52 avec un jeu radial relativement faible et avec un jeu axial (par rapport à l'orifice cylindrique 40) sensiblement nul.

Un évidement 56 est formé dans la face latérale de ce secteur 12 pour retenir le bec 50 du crochet 46.

L'assemblage final de ces moyens de liaison est des plus simples.

Lorsque les extrémités des secteurs 12 sont positionnées en face les unes des autres autour de la jante d'une roue, à l'intérieur d'un pneumatique, les extrémités des tiges cylindriques 18 montées sur des extrémités de secteur 12 peuvent être introduites dans les passages 40 des autres extrémités de secteur 12 comme représenté aux figures 7 et 8.

Il suffit ensuite de pousser l'un vers l'autre les deux secteurs 12, comme indiqué schématiquement par les flèches F en figure 2, de préférence depuis l'intérieur du pneumatique, pour engager les tiges 18 dans les pièces femelles 20, jusqu'à ce que les secteurs 12 soient serrés suffisamment sur la jante de la roue. Les moyens de liaison sont alors dans l'état représenté aux figures 9 et 10, les extrémités des secteurs 12 étant séparées d'un jeu faible de quelques millimètres, les becs 50 des crochets 46 étant logés à l'intérieur des évidements 56 précités, après un glissement sur les faces latérales des secteurs 12.

La force de poussée nécessaire pour engager les tiges 18 dans les pièces femelles 20 dépend bien entendu du nombre de rondelles 28 comprises dans une pièce femelle 20, du diamètre extérieur des tiges cylindriques 18 et du diamètre défini par les dents radiales 34 des rondelles 28.

Dans un exemple correspondant au mode de réalisation des figures 7 à 10, il faut appliquer une poussée d'environ 2000 N pour engager une tige cylindrique 18 dans une pièce femelle 20 et exercer une traction de plus de 8000 N sur la tige 18 pour l'extraire de la pièce femelle 20, les dents radiales 34 venant s'ancrer dans les tiges 18 et étant dans une position d'arc-boutement s'opposant au retrait des tiges 18 hors des pièces femelles 20.

Il est prévu que les dispositifs de roulage à plat selon l'invention auront une durée de vie plusieurs fois supérieure à celle d'un pneumatique, de sorte qu'ils devront être montés et démontés plusieurs fois sur la jante d'une roue pendant la durée de vie d'un véhicule avant d'être considérés comme hors d'usage.

Pour le démontage d'un dispositif de roulage à plat selon l'invention, il faut dégonfler le pneumatique, sortir de la jante le talon du pneumatique qui se trouve du côté des moyens 16 de liaison des secteurs 12, dévisser les vis 48 de fixation des crochets de sécurité 46 et retirer ces crochets, puis écarter l'un de l'autre les secteurs 12. Les tiges 18 restent engagées dans les pièces femelles 20 et sont extraites des passages 40 dans lesquels leurs têtes 24 étaient logées.

Au remontage, on positionne les secteurs 12 face à face autour de la jante de la roue, à l'intérieur du pneumatique dont le talon précité est dégagé de la jante, et on les pousse l'un vers l'autre pour engager les têtes 24 des tiges 18 dans les orifices 40 correspondants des extrémités des secteurs 12. On peut, à l'aide d'un outil approprié, serrer les secteurs 12 sur la jante de la roue et on peut alors remettre en place les crochets de sécurité 46 dans la position représentée aux figures 9 et 10 et les fixer au moyen des vis 48.

Les jeux dus à un éventuel fluage de la matière plastique des secteurs 12 peuvent être rattrapés en enfonçant davantage les tiges 18 dans les pièces femelles 20.

La deuxième gorge 26 formée dans la pièce mâle 18 au voisinage de sa tête 24, permet, par engagement de l'extrémité en pointe ou en coin d'un outil (tel qu'un tournevis) dans la fente 42a correspondante, d'exercer une traction sur la pièce 18 et de serrer l'une vers l'autre les extrémités de secteur 12, pour faciliter le montage de la patte en U 44 dans l'autre gorge 26 (et aussi son extraction de cette autre gorge).

Par ailleurs, la vis 48 précitée peut servir, non à la fixation du crochet 46 sur un secteur 12, mais au démontage de ce crochet : il suffit pour cela que la vis 48 soit vissée dans un orifice taraudé du crochet 46 et que sa pointe s'appuie sur le secteur 12 sans y pénétrer.

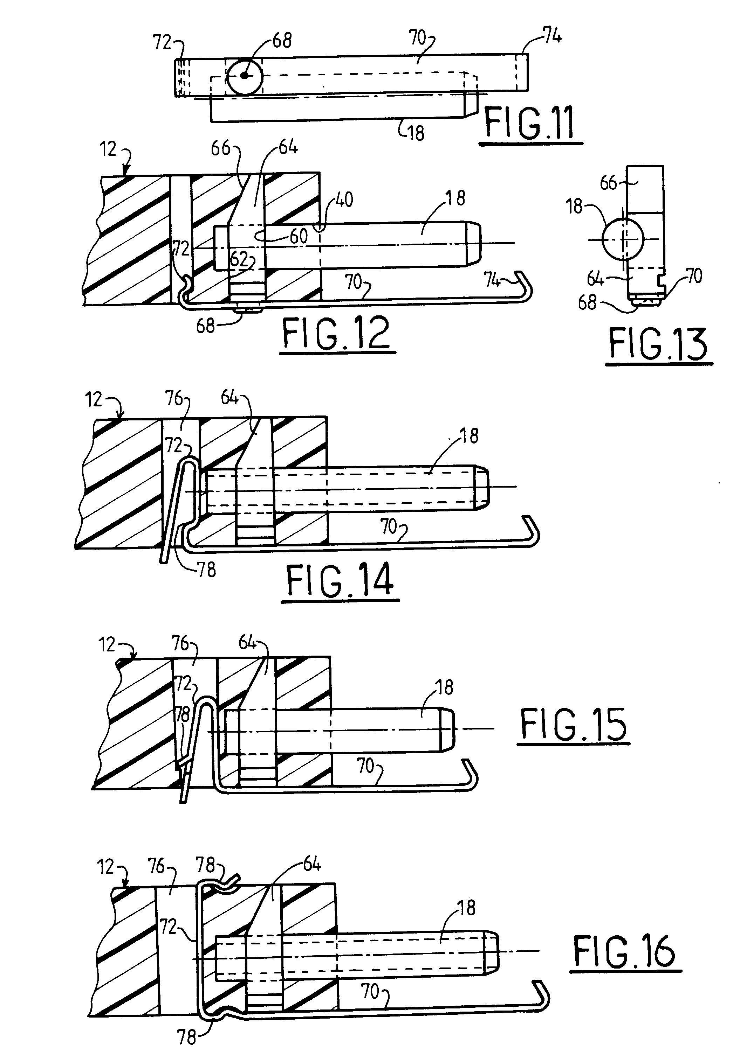

Des variantes de réalisation des moyens de liaison des secteurs 12 ont été représentées schématiquement aux figures 11 à 16.

Dans la variante des figures 11 à 13, la pièce mâle 18 des moyens de liaison est une tige cylindrique à surface extérieure lisse dont une extrémité 22 est tronconique pour être engagée plus facilement dans une pièce femelle 20 du type précédemment décrit, la partie d'extrémité opposée de la pièce mâle 18 étant formée avec une rainure transversale 60 à section par exemple rectangulaire ou carrée. Cette rainure est destinée à être amenée, dans le passage 40 recevant la pièce mâle 18, au niveau d'un logement 62 formé dans le secteur 12 et débouchant sur une face latérale de celui-ci pour recevoir une clavette 64 dont une extrémité 66 est conique ou oblique pour présenter au moins une rampe tirant la pièce mâle 18 à l'intérieur du passage 40 dans le sens du serrage des secteurs 12 lorsque la clavette 64 est enfoncée dans le logement 62 du secteur 12 et dans la rainure 60 de la pièce mâle 18.

La tête de la clavette 64, opposée à la rampe 66, comporte ou reçoit un bouton 68 sur lequel on peut engager une fente en U d'un crochet de sécurité 70 du même type que le crochet 46 précédemment décrit, une extrémité 72 du crochet 70 étant recourbée en S pour s'encliqueter sur une saillie du secteur 12, l'autre extrémité 74 du crochet formant un bec d'accrochage sur l'autre secteur 12 portant la pièce femelle associée à la pièce mâle 18 précitée.

Au premier montage, la pièce mâle 18 est enfoncée dans le passage 40 du secteur 12 représenté en figure 12 jusqu'à venir en butée sur le fond de ce passage, la clavette 64 est mise en place et le crochet de sécurité 70 est engagé sur le bouton 68 de la clavette et accroché par son extrémité 72 sur le secteur 12 précité. Au serrage du dispositif de roulage à plat sur la jante de la roue, la pièce mâle 18 s'engage dans la pièce femelle 20 de l'autre secteur 12 et l'extrémité 74 du crochet 70 s'accroche dans l'évidement 56 de l'autre secteur 12 (voir les figures 7 à 10).

Pour le démontage, il faut après avoir dégagé le talon du pneumatique de la jante, démonter chaque crochet de sécurité, puis extraire les clavettes 64 pour libérer les pièces mâles 18. On peut alors écarter les secteurs 12 l'un de l'autre.

Au remontage, les pièces mâles 18 sont restées engagées dans les pièces femelles 20 et il suffit donc d'introduire les extrémités libres des pièces mâles 18 dans les passages 40 des secteurs 12, puis d'engager les clavettes 64 dans les rainures 60 des pièces mâles 18 et de les enfoncer complètement, au besoin en tapant dessus avec un marteau, pour serrer à nouveau les secteurs 12 sur la jante de la roue.

Un léger allongement circonférentiel des secteurs 12, résultant de l'échauffement lors d'un roulage à plat, peut être rattrapé en enfonçant un peu plus les pièces mâles 18 dans les pièces femelles 20 avant le remontage des secteurs 12 sur la jante de la roue.

Les variantes de réalisation des figures 14, 15 et 16 diffèrent de celle des figures 11 à 13 par la forme de l'extrémité 72 du crochet de sécurité 70.

Dans les figures 14 et 15, cette extrémité 72 est repliée en V et introduite dans un passage transversal débouchant 76 du secteur 12, et elle comporte un cran de retenue 78 formé par un coude du crochet 70 en figure 14 ou par un crevé d'une patte de l'extrémité pliée 72 du crochet 70, ce cran 78 coopérant avec une partie en saillie du passage 76 précité.

Ce passage 76 débouche sur les deux faces du secteur 12, ce qui facilite le retrait du crochet 70 en permettant d'agir sur l'extrémité 72 du crochet depuis la face latérale du secteur 12 opposée à celle sur laquelle le crochet est appliqué.

Dans la forme de réalisation de la figure 16, l'extrémité 72 du crochet est pliée en U et est formée sur ses deux branches parallèles avec deux crans 78, qui s'engagent dans des cavités correspondantes des faces latérales du secteur 12, pour assurer par effet de clipsage le maintien du crochet 70 sur le secteur 12.

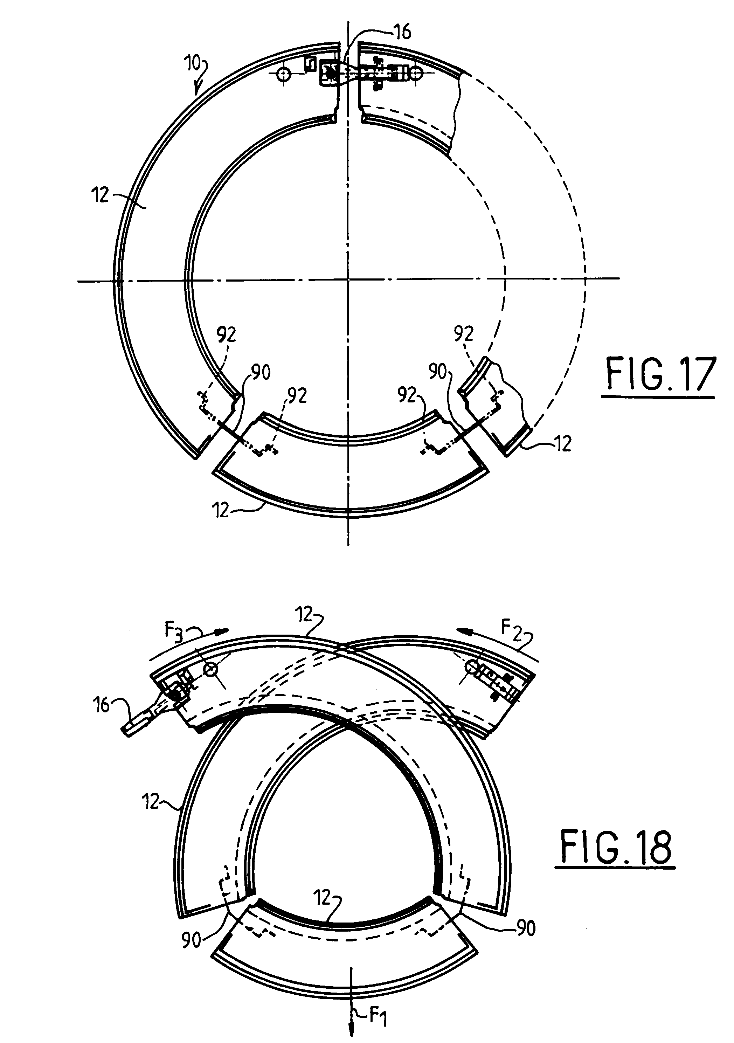

Une variante de réalisation du dispositif selon l'invention est représentée aux figures 17 et 18, cette variante ayant essentiellement pour avantage de faciliter la mise en place du dispositif sur une jante de roue à l'intérieur d'un pneumatique.

Dans cette variante, la pièce annulaire 10 est formée de trois secteurs 12 dont deux ont une étendue angulaire comprise entre 130 et 150° environ (par exemple 140° environ) et le troisième une étendue angulaire de 60 à 100° environ (par exemple de 80°). Ce troisième secteur est situé entre les deux autres et leur est relié en permanence par des moyens 90 inextensibles mais élastiquement déformables, tels par exemple que des bandes d'acier à ressort dont les extrémités repliées 92 sont noyées et ancrées dans la matière des secteurs 12 lors de leur moulage.

Les extrémités en regard des deux autres secteurs 12 sont reliées par des moyens de liaison 16 du type décrit plus haut.

Pour la mise en place de ce dispositif sur une jante à l'intérieur d'un pneumatique, on resserre le dispositif sur lui-même comme représenté en figure 18, on introduit d'abord le troisième secteur 12 de plus faible étendue à l'intérieur du pneumatique par translation selon la flèche F1, puis on introduit les deux autres secteurs 12 dans le pneumatique, successivement, par rotation ou pivotement selon les flèches F2, F3. Il reste ensuite à serrer les secteurs 12 sur la jante grâce aux moyens 16 en procédant comme indiqué dans ce qui précède.

Dans tous les modes de réalisation du dispositif selon l'invention qui viennent d'être décrits, les secteurs 12 sont mis en tension par les moyens de liaison 16 pour être serrés sur la jante de la roue et immobilisés en rotation sur celle-ci, en résistant à un couple de rotation de l'ordre de 200N.m au minimum.

Comme décrit dans les brevets précités de la demanderesse, une couche de gel lubrifiant est prévue sur la face interne du pneumatique et/ou sur la bande de roulement 15 des secteurs 12 pour réduire l'usure du pneumatique lors du roulage à plat.

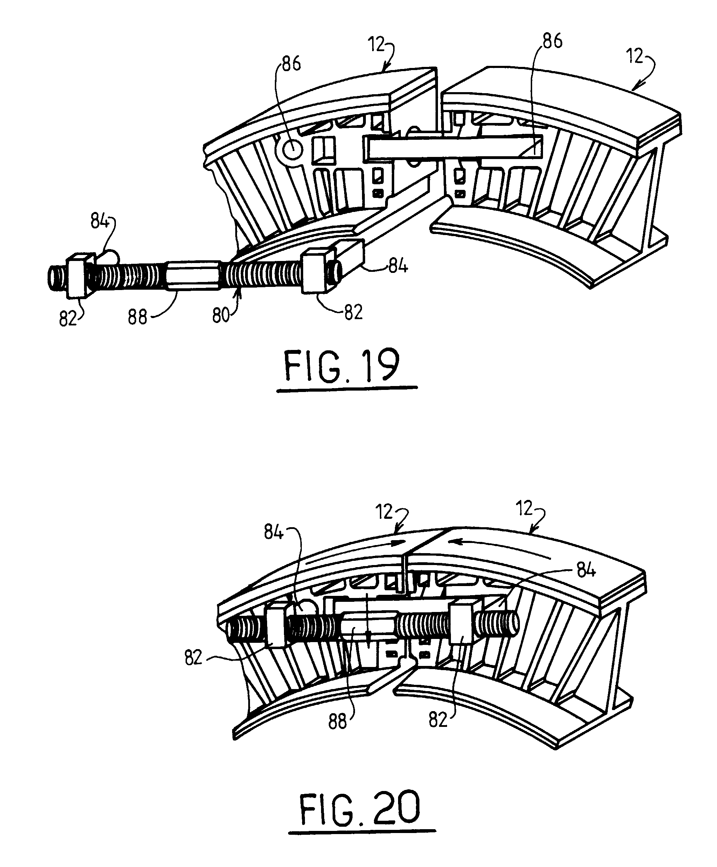

Un exemple d'outil permettant le serrage du dispositif sur la jante d'une roue, après un changement de pneumatique, est représenté schématiquement aux figures 19 et 20.

Cet outil comprend une tige cylindrique 80 dont les extrémités formées avec des filetages de pas inverses sont vissées dans des écrous 82 munis de doigts 84 destinés à être engagés dans des cavités 86 des secteurs 12 à serrer sur la jante, l'une de ces cavités pouvant par exemple être celle désignée par la référence 56 aux figures 7 à 10 et qui est destinée à recevoir l'extrémité 50 (ou 74) du crochet de retenue 46 (ou 70).

La partie médiane 88 de la tige 80 est à section par exemple hexagonale pour l'entraînement de la tige en rotation autour de son axe.

Lorsque les doigts 84 des écrous 82 sont engagés dans les cavités 86 des secteurs 12 comme représenté en figure 18, les écrous 82 sont immobilisés en rotation et la rotation de la partie médiane 88 de la tige 80 dans un sens approprié provoque le serrage des secteurs 12 sur la jante et leur mise en tension.

## Revendications

1. Dispositif de roulage à plat pour véhicule automobile, comprenant une pièce annulaire (10) en matière plastique destinée à être montée sur une jante d'une roue à l'intérieur d'un pneumatique et réalisée en un ou plusieurs secteurs (12) dont deux extrémités en regard sont reliées par des moyens de liaison rigide (16) comprenant une pièce mâle métallique (18) solidaire d'une extrémité de secteur et une pièce femelle métallique (20) solidaire de l'autre extrémité de secteur et formée avec des dents radiales (34) inclinées dans un sens favorisant l'engagement de la pièce mâle (18) dans la pièce femelle (20) et s'opposant à son retrait, caractérisé en ce que, pour assurer le montage fixe en rotation de la pièce annulaire (10) sur la jante de la roue, la pièce mâle (18) engageable dans la pièce femelle (20) comprend une surface extérieure lisse dans laquelle viennent s'ancrer les dents radiales (24) de la pièce femelle.

2. Dispositif selon la revendication 1, caractérisé la pièce mâle (18) est fixée de façon amovible sur l'extrémité de secteur, par exemple au moyen d'une patte ou clavette transversale (44, 64) logée dans un passage du secteur (12) débouchant sur une face latérale de ce secteur et engagée dans une gorge ou rainure transversale de la pièce mâle (18).

3. Dispositif selon la revendication 2, caractérisé en ce que la patte transversale (44) fait partie d'un crochet de sécurité (46) reliant les deux extrémités de secteur.

4. Dispositif selon la revendication 2, caractérisé en ce que la clavette (64) est maintenue en position de fixation de la pièce mâle (18) par un crochet de sécurité (70) reliant les extrémités de secteur.

5. Dispositif selon la revendication 3 ou 4, caractérisé en ce que le crochet de sécurité (46, 70) comprend à une extrémité un bec (50, 74) s'engageant sur des moyens de retenue (56) formés sur une extrémité de secteur.

6. Dispositif selon la revendication 2, caractérisé en ce que ladite clavette (64) comprend au moins une face oblique (66) coopérant avec une rainure transversale (60) de la pièce mâle (18) pour exercer une traction axiale sur celle-ci à la mise en place de la clavette (64).

7. Dispositif selon la revendication 4 ou 5, caractérisé en ce que le crochet de sécurité (70) est fixé par encliquetage élastique sur l'extrémité de secteur portant la pièce mâle (18).

8. Dispositif selon l'une des revendications 3 à 7, caractérisé en ce que le crochet de sécurité comprend un orifice fileté permettant, par vissage d'une tige filetée prenant appui sur une face latérale d'une extrémité de secteur, de démonter le crochet de sécurité.

9. Dispositif selon l'une des revendications précédentes, caractérisé en ce que la pièce femelle (20) comprend au moins une rondelle métallique (28) formée avec des dents radiales (34) répartie sur sa périphérie interne.

10. Dispositif selon la revendication 9, caractérisé en ce que la pièce (20) comprend plusieurs rondelles (28) noyées dans un bloc (30) de caoutchouc ou de matière synthétique ou portées par une cage rigide.

11. Dispositif selon l'une des revendications précédentes, caractérisé en ce que la pièce femelle (20) est montée dans un logement (52) formé à une extrémité d'un secteur (12) et débouchant sur une face latérale de ce secteur.

12. Dispositif selon l'une des revendications précédentes, caractérisé en ce que la pièce femelle (20) comprend un rebord annulaire (38) formant détrompeur à l'une de ses extrémités.

13. Dispositif selon l'une des revendications précédentes, caractérisé en ce que la pièce mâle (18) comprend deux gorges (26) au voisinage d'une de ses extrémités, ces gorges étant destinées à recevoir l'une une patte ou clavette de fixation, et l'autre une extrémité en pointe ou en coin d'un outil, par exemple d'un tournevis pour exercer une traction sur ladite pièce mâle et permettre la mise en place de la patte ou clavette précitée.

14. Dispositif selon l'une des revendications précédentes, caractérisé en ce que la pièce annulaire (10) est formée de plusieurs secteurs dont deux extrémités sont reliées par les moyens de liaison (16) précités et dont les autres extrémités sont reliées par des bandes (90) de matière élastiquement déformables, par exemple d'acier à ressort, dont les extrémités (92) sont ancrées dans les extrémités de secteur.

15. Dispositif selon la revendication 14, caractérisé en ce que la pièce annulaire (10) est formée de trois secteurs (12) dont deux s'étendent sur 130-150° environ et le troisième sur 60-100° environ.

16. Procédé de démontage et de montage d'un dispositif de roulage à plat selon l'une des revendications précédentes, caractérisé en ce qu'il consiste à démonter les crochets de sécurité (46, 70) et à libérer les pièces mâles (18) des extrémités de secteur dont elles étaient solidaires, à ôter le ou les secteurs (12) de la jante de la roue, puis après changement de pneumatique, à remettre en place le ou les secteurs (12) sur la jante, à pousser leurs extrémités les unes vers les autres et à remettre en place les clavettes (64) et/ou les crochets de sécurité (46, 70).

17. Procédé selon la revendication 16, caractérisé en ce qu'on utilise, pour le serrage du ou des secteurs (12) sur la jante de la roue, une tige cylindrique (80) dont les extrémités filetées en sens inverse l'une de l'autre sont vissées dans des écrous (82) solidarisables avec les extrémités de secteur à rapprocher, ladite tige (80) comprenant une partie médiane (88) d'entraînement en rotation.
